# EUROPÄISCHE PATENTSCHRIFT

(11) **EP 1 426 578 B1**
(45) Veröffentlichungstag und Bekanntmachung des Hinweises auf die Patenterteilung: **12.04.2006**
(21) Anmeldenummer: 03025937.8
(22) Anmeldetag: 13.11.2003
(51) Int. Cl.: F02B 37/00, F02B 37/10, F02B 37/12

(54) **Verfahren zum Prüfen von Abgasturboladern**
Method for testing of exhaust gas turbochargers
Procédé pour tester les turbocompresseurs

(30) Priorität: 03.12.2002 DE 10256627; 09.01.2003 DE 10300357
(43) Veröffentlichungstag der Anmeldung: 09.06.2004
(73) Patentinhaber: Johann A. Krause Maschinenfabrik GmbH, 28777 Bremen (DE)
(72) Erfinder: Rohde, Christian, 28209 Bremen (DE)
(74) Vertreter: Möller, Friedrich

(56) Entgegenhaltungen:
- EP-A- 0 464 822
- DE-A- 19 837 834
- DE-C- 4 223 777
- PATENT ABSTRACTS OF JAPAN Bd. 1998, Nr. 12, 31. Oktober 1998 (1998-10-31) & JP 10 196383 A (KOYO SEIKO CO LTD), 28. Juli 1998 (1998-07-28)

## Beschreibung

Die Erfindung betrifft ein Verfahren zum Prüfen von Turboladern gemäß dem Oberbegriff des Anspruchs 1.

Bei der Erfindung geht es darum, Abgasturbolader im sogenannten Kalttest zu prüfen. Dazu ist es aus der DE 42 43 777 C bereits bekannt, die Turbine des Abgasturboladers nicht mit heißer Verbrennungsluft eines Verbrennungsmotors zu betreiben, sondern mit Druckluft. Beim bekannten Kalttest wird dazu die Turbine mit Druckluft aus einem üblichen Druckluftnetz angetrieben und die Prüfung mindestens unter Einbeziehung von Messgrößen am Verdichter des jeweiligen Abgasturboladers durchgeführt. Durch eine Drosselklappe kann der Druckluftstrom bedarfsgerecht geöffnet werden. Dementsprechend ist die Turbine des zu prüfenden Abgasturboladers mehr oder weniger stark belastbar. Die bekannte Prüfung dient dazu, einen einfachen Zahlenvergleich zwischen unterschiedlichen Abgasturboladern in einer baugleichen Serie zu erhalten, wozu nur ein einziger Betriebspunkt anzufahren ist. Es ist aber beim bekannten Kalttest nicht möglich, den Abgasturbolader im Turbokennfeld so zu betreiben und zu belasten, dass sich seine Leistungsfähigkeit und Betriebscharakteristik ermitteln lässt. Das ist vor allem dann nachteilig, wenn, wie bei V-Verbrennungsmotoren mit mehreren Abgasturboladern üblich, jeder Zylinderbank ein Abgasturbolader zugeordnet ist, der Verbrennungsmotor also über zwei Abgasturbolader verfügt. Die beiden Abgasturbolader sollen möglichst synchron betrieben werden können. Selbst bei prinzipiell gleichen Abgasturboladern unterscheiden sich ihre Wirkungsgrade und Betriebscharakteristika aufgrund verschiedener Einflüsse, insbesondere Toleranzen. Die unterschiedlichen Betriebscharakteristiken an sich gleicher Abgasturbolader lassen einen Synchronlauf nicht zu. Deswegen ist man bestrebt, für einen Verbrennungsmotor mit mehreren Abgasturboladern solche Abgasturbolader auszuwählen, die über nahezu die gleichen Charakteristika verfügen. Dazu muss sich im Kalttest das Betriebsverhalten jedes Abgasturboladers prüfen lassen, was bekannte Kalttests der eingangs beschriebenen Art nicht zulassen.

Hiervon ausgehend liegt der Erfindung die Aufgabe zugrunde, ein Verfahren zum Prüfen von Abgasturboladern zu schaffen, womit im Kalttest auch Messgrößen belasteter Abgasturbolader erfassbar sind.

Ein Verfahren zur Lösung dieser Aufgabe weist die Maßnahmen des Anspruchs 1 auf. Dadurch, dass der Druck der Luft zum Antrieb der Turbine des oder jedes Abgasturboladers mindestens teilweise von einem schleppend angetriebenen Verbrennungsmotor erzeugt wird, kann der Kalttest des Abgasturboladers realitätsnah, insbesondere im Turbokennfeld, simuliert werden. Insbesondere ist es so möglich, Messgrößen, die am schleppend angetriebenen Abgasturbolader ermittelt worden sind, mit entsprechenden, vorzugsweise zeitgleich ermittelten Messgrößen des ebenfalls kalt betriebenen, geschleppten Verbrennungsmotors zu vergleichen. Das gilt insbesondere dann, wenn gemäß einer bevorzugten Ausgestaltung des Verfahrens derjenige Verbrennungsmotor schleppend angetrieben wird, mit dem der Abgasturbolader oder auch mehrere Abgasturbolader bei sogenannten Bi-Turbomotoren im späteren Betrieb zusammenarbeiten.

Der Kalttest des Abgasturboladers (oder bei Bi-Turbomotoren) beider Abgasturbolader kann erfolgen mit unter Druck stehender Luft, die allein vom schleppend angetriebenen Verbrennungsmotor erzeugt wird. Es ist aber auch denkbar, dem Ansaugtrakt des schleppend angetriebenen Verbrennungsmotors bereits unter einem gewissen Druck stehende Luft zuzuführen, deren Druck im angetriebenen Verbrennungsmotor erhöht wird, so dass zum Kalttest des jeweiligen Abgasturboladers kalte Luft mit einem verhältnismäßig hohen Druck zur Verfügung steht. Mit beiden alternativen Betriebsweisen lässt sich der Kalttest des jeweiligen Abgasturboladers vorteilhafter durchführen als das bei bekannten Kalttests möglich war. Insbesondere im Falle der Zufuhr von unter Druck stehender Luft zum Verbrennungsmotor kann der jeweilige Abgasturbolader mit unter einem verhältnismäßig hohen Druck stehender Luft (Druckluft) getestet werden, wodurch der Kalttest relativ praxisnah durchführbar ist, und zwar mit Turbinendrehzahlen des jeweils zu testenden Abgasturboladers von bis zu 100.000 U/min.

Eine Weiterbildung des Verfahrens sieht vor auf der Druckseite des Verdichters die Luft zu drosseln. Dadurch entsteht auf der Druckseite ein Luftstau, der zu einer Druckerhöhung der Luft führt. Die Folge ist, dass der Abgasturbolader im Kalttest unter Last läuft, weil die Turbine arbeitet, nämlich Luft verdichtet. Im Gegensatz zum Kalttest von Turboladern gemäß dem Stand der Technik können so auch am Verdichter der im Kalttest zu prüfenden Abgasturbolader Messgrößen ermittelt werden, die dem wahren Betrieb der Abgasturbolader realitätsnah nachgebildet sind.

Die Drosselung der Luft auf der Druckseite des jeweiligen Verdichters erfolgt durch eine zum Kalttest erfolgende Anordnung einer Drossel an oder hinter der Druckseite des Verdichters. Dadurch entsteht zwischen der Druckseite des Verdichters und der Drossel eine Messstrecke, in der die erforderlichen Geber der Messgeräte adaptiert werden können. Die Drossel ermöglicht es auch, dass die Luft dahinter ins Freie austreten kann. Gleichwohl weist die Luft der Strecke bis zur Drossel einen erhöhten Druck auf, der Messungen zulässt, weil der Verdichter arbeitet, nämlich Luft komprimieren kann. Das freie Ableiten der Luft hinter der Drossel macht es nicht erforderlich, zum Kalttest den Verdichter des Abgasturboladers mit der Ansaugseite des Verbrennungsmotors zu verbinden.

Zum Antrieb der Turbine des jeweils zu prüfenden Abgasturboladers wird Druckluft verwendet, die auf der Abgasseite eines schleppend angetriebenen Verbrennungsmotors entsteht. Der Druck dieser Druckluft kann gegebenenfalls erhöht werden durch Zufuhr von unter Druck stehender Luft zum Ansaugtrakt des schleppend angetriebenen Verbrennungsmotors. Die genannte Alternative zur Druckluftversorgung der Turbine des zu prüfenden Abgasturboladers lässt es aufgrund der Drossel an der Druckseite des Verdichters zu, diesen sozusagen unter Last im Kalttest zu prüfen.

Gemäß einer bevorzugten Weiterbildung des Verfahrens werden die am Verdichter des jeweils zu prüfenden Abgasturboladers zu ermittelnden Messgrößen, insbesondere der Verdichtungsenddruck (Ladedruck), zwischen der Druckseite des Verdichters und der Drossel ermittelt. Hier lassen sich die Messgrößen unter realitätsnahen Bedingungen ermitteln, wobei sich gleichzeitig die zum Messen erforderlichen Messgrößenaufnehmer rasch und einfach adaptieren lassen.

Vorzugsweise werden als Messgrößen beim Kalttest des jeweiligen Abgasturboladers der Verdichtungsenddruck (Ladedruck) der Verdichterluftmassenstrom, der Verbrennungsmotorluftmassenstrom, der Ansaugdruck des Verbrennungsmotors, die Abgasturboladerdrehzahl, die Verbrennungsmotordrehzahl und/oder Temperaturen der Druckluft und/oder des Öls ermittelt. Die genannten Messgrößen werden gemeinsam oder gegebenenfalls auch nur zum Teil ermittelt. Dabei gewährleistet ist erfindungsgemäße Verfahren die Ermittlung realitätsnaher und aussagekräftiger Messgrößen, und zwar insbesondere deswegen, weil es das erfindungsgemäße Verfahren ermöglicht, den oder jeden im Kalttest zu prüfenden Abgasturbolader im Turbokennfeld (kalt) zu prüfen.

Es ist weiterhin vorgesehen, Kennwerte des jeweiligen Abgasturboladers aus Verhältnissen der beim Kalttest ermittelten Messgrößen zu bestimmen. Dabei handelt es sich vorzugsweise um das Verhältnis des Verdichterluftmassenstroms zum Verbrennungsmotorluftmassenstrom, das Verhältnis des Ladedrucks zum Verbrennungsmotortuftmassenstrom, das Verhältnis des Verdichterluftmassenstroms zur Drehzahl des Abgasturboladers und/oder das Verhältnis des Ladedrucks zur Abgasturboladerdrehzahl. Diese Kennwerte lassen auch bei in kaltem Zustand geprüften Abgasturboladern Aussagen über ihre Funktion, Leistung, Wirkungsgrad und/oder Ladedruckcharakteristik zu, die - obwohl die Messgrößen im simulierten Kalttest aufgenommen worden sind - mit den Gegebenheiten im Praxisbetrieb des jeweiligen Abgasturboladers übereinstimmen oder zumindest vergleichbar sind.

Die erfindungsgemäßen Verfahren lassen sich bevorzugt auch zum gleichzeitigen Prüfen zweier Abgasturbolader verwenden, die einem gemeinsamen Verbrennungsmotor (Bi-Turbolader) zugeordnet sind. Bei Bi-Turboladern kommt es besonders auf den Synchronlauf der einzelnen Abgasturbolader an. Dieser ist aufgrund fertigungsbedingter Einflüsse, insbesondere Toleranzen, in der Praxis nur schwer erzielbar. Deswegen wählt man für einen zwei Abgasturbolader erfordernden Verbrennungsmotor solche Abgasturbolader aus, die eine gleiche oder annähernde Charakteristik aufweisen. Hierzu eignet sich besonders der Kalttest nach demerfindungsgemäßen Verfahren, weil aufgrund der ermittelten Messgrößen und Kennwerte sich ableiten lässt, ob die Abgasturbolader Eigenschaften aufweisen, die einen gemeinsamen Betrieb am Verbrennungsmotor zulassen, insbesondere eine gute Synchronisation erwarten lassen. Gegebenenfalls kann dann, wenn sich beim Kalttest herausstellt, dass die beiden getesteten Abgasturbolader unterschiedliche Charakteristika aufweisen, durch gegebenenfalls mehrfaches Austauschen mindestens eines Abgasturboladers ein passendes Paar an Abgasturboladern mit möglichst gleichen Charakteristiken ermittelt werden.

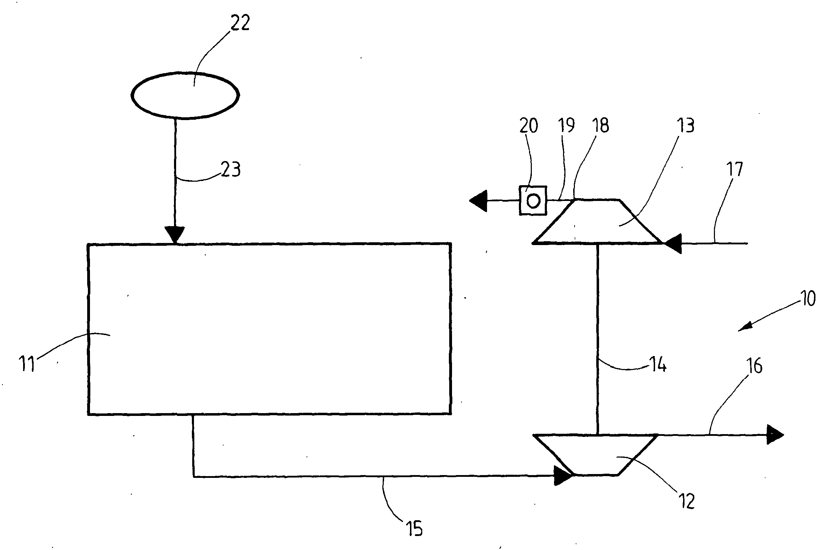

Ein bevorzugtes Ausführungsbeispiel des erfindungsgemäßen Verfahrens wird nachfolgend anhand der Zeichnung näher erläutert. Die einzige Figur der Zeichnung zeigt prinzipiell ein Schaltbild eines zu prüfenden Abgasturboladers mit dem dazugehörenden Verbrennungsmotor.

Das in der Figur gezeigte Ausführungsbeispiel der Erfindung bezieht sich auf die Prüfung eines (einzigen) Abgasturboladers 10, der einem Verbrennungsmotor 11 zugeordnet ist. Beim Verbrennungsmotor 11 kann es sich sowohl um ein Ottomotor also auch um einen Dieselmotor handeln. Vorzugsweise wird ein Verbrennungsmotor 11 verwendet, der zusammen mit dem Abgasturbolader 10 verbaut wird. Es wird also der Abgasturbolader 10 an demjenigen Verbrennungsmotor 11 geprüft, mit dem der Abgasturbolader 10 später auch betrieben wird. Der Abgasturbolader 10 wird im sogenannten Kalttest mit Umgebungstemperatur aufweisender Druckluft geprüft. Dabei wird der Verbrennungsmotor 11 schleppend angetrieben, also beim Kalttest des Abgasturboladers 10 ebenfalls im kalten, unbefeuerten Zustand betrieben.

Der Abgasturbolader 10 weist eine Turbine 12 auf, die einen Verdichter 13 antreibt. Dazu ist der Verdichter 13 mit der Turbine 12 direkt gekoppelt, vorzugsweise über eine die Turbine 12 mit dem Verdichter 13 verbindende Antriebswelle 14.

Der Verbrennungsmotor 11 ist über eine Druckluftleitung 15 mit der Eingangsseite der Turbine 12 verbunden. Die Dr uckluftleitung 15 geht vom Abgastrakt des Verbrennungsmotors 11 aus. Vorzugsweise ist die Druckluftleitung 15 an den Abgaskrümmer des Verbrennungsmotors 11 angeschlossen. Die zum Antrieb der Turbine 12 des zu prüfenden Abgasturboladers 10 dienende Druckluft wird beim Antrieb der Turbine 12 entspannt und tritt über den Ausgang der Turbine 12 ins Freie. Dieser Austritt der in der Turbine 12 entspannten Luft ist in der Zeichnung durch einen Pfeil 16 symbolisiert.

Der Verdichter 13 saugt an seiner Einlassseite Umgebungsluft an. Dieses ist durch einen Pfeil 17 in der Figur symbolisiert. Der von der Turbine 12 über die Antriebswelle 14 angetriebene Verdichter 13 verdichtet die angesaugte Luft. Die danach an einer Druckseite 18 den Verdichter 13 verlassende komprimierte Luft wird über eine von der Druckseite 18 des Verdichters 13 ausgehende Verbindungsleitung 19 zu einer Drossel 20 geleitet. Bei der Drossel 20 handelt es sich im einfachsten Falle um eine Lochblende mit einem Lochdurchmesser zwischen 5 mm und 15 mm. Vorzugsweise beträgt der Lochdurchmesser 10 mm bis 11 mm. Hinter der Drossel 20 wird die Luft in Richtung des Pfeils 21 ins Freie abgeleitet.

Durch die Drossel 20 arbeitet trotz der Ableitung der Luft ins Freie der Verdichter 13 unter Last, weil die Drossel 20 in der Verbindungsleitung 19 einen Überdruck entstehen lässt. Diesen Überdruck muss der Verdichter 13 erzeugen, so dass dieser beim Kalttest des Abgasturboladers 10 unter Betriebsbedingungen (unter Last) arbeitet. Die Verbindungsleitung 19 zwischen dem Luftauslass an der Druckseite 18 des Verdichters 13 und der Drossel 20 eignet sich zur Applikation von Messwertaufnehmern zur Ermittlung von Messgrößen an der Druckseite 18 des Verdichters 13.

Das erfindungsgemäße Verfahren läuft wie folgt ab:

Vom ungefeuerten, schleppend angetriebenen Verbrennungsmotor 11 wird angesaugte Umgebungsluft verdichtet. Aus Sicherheitsgründen wird der Verbrennungsmotor beim Kalttest des Abgasturboladers 10 mit maximal 3.000 U/min angetrieben. Die an der Abgasseite des Verbrennungsmotors 11 aufgrund seines schleppenden Antriebs anfallende Druckluft gelangt über die Abgaskrümmer des Verbrennungsmotors 11 und die Druckluftleitung 15 zum Einlass der Turbine 12 des kalt zu testenden Abgasturboladers 10. Die vom Verbrennungsmotor 11 kommende Druckluft treibt dabei die Turbine 12 an, und zwar mit einer Drehzahl, von bis zu 100.000 U/min. Dabei arbeitet der Abgasturbolader 10 im sogenannten Turbokennfeld. Die beim Antrieb der Turbine 12 entspannte Luft entweicht im Wesentlichen drucklos aus der Turbine 12. Die von der Druckluft angetriebene Turbine 12 treibt über die Antriebswelle 14 den Verdichter 13 an. Dieser saugt dabei an der Ansaugseite drucklose Umgebungsluft an und verdichtet diese. Die dadurch komprimierte und unter Druck stehende Luft strömt über die Verbindungsleitung 19 zur Drossel 20 und entweicht hinter der Drossel 20 ins Freie. Die Drossel 20 hält den vom Verdichter 13 erzeugten Druck der Luft in der Verbindungsleitung 19 im Wesentlichen aufrecht, wobei in der Verbindungsleitung 19 Messungen der vom im Turbokennfeld arbeitenden Verdichter 13 verdichteten Luft stattfinden können.

In der Figur der Zeichnung ist noch eine externe Druckluftquelle 22 angedeutet. Die externe Druckluftquelle 22 liefert unter Druck stehende Luft, die über eine Verbindungsleitung 23 zum Ansaugtrakt, vorzugsweise zu den Ansaugkrümmern, des Verbrennungsmotors 11 geleitet wird. Die von der Druckluftquelle 22 vorkomprimierte Luft dient - wenn es zum Kalttest erforderlich oder gewünscht ist - zum Aufladen des Verbrennungsmotors 11. Hierdurch wird die Luftmasse, welche durch den Verbrennungsmotor 11 und anschließend durch die Turbine 12 strömt, erhöht. Hieraus resultiert eine nochmalige Erhöhung der Drehzahl des Abgasturboladers 10. Es ist aber auch denkbar, den Kalttest des Abgasturboladers 10 vorzunehmen, ohne dass dem Verbrennungsmotor 11 auf der Ansaugseite vorverdichtete Luft zugeführt wird. Bei dieser Verfahrensweise saugt der Verbrennungsmotor 11 drucklose Umgebungsluft an.

Beim Kalttest des Abgasturboladers 10 mit schleppend bis zu einer Maximaldrehzahl von 3000 U/min angetriebenen Verbrennungsmotor 11 und einer erzeugten Drehzahl der Turbine 12 von bis zu 100.000 Ulmin werden folgende Messgrößen erfasst: Abgasturboladerdrehzahl, Verbrennungsmotordrehzahl, Verdichterluftmassenstrom, Verbrennungsmotorluftmassenstrom, Ladedruck des Abgasturboladers 10, Ansaugdruck des Verbrennungsmotors 11 und die Temperatur der Luft sowie des Öls. Es müssen nicht zwangsläufig alle genannten Messgrößen erfasst werden, es kann gegebenenfalls ausreichen, nur einen Teil dieser genannten Messgrößen zu erfassen.

Der Verdichterluftmassenstrom wird ermittelt durch einen Luftmassenmesser, das auf der Saugseite (Pfeil 17) des Verdichters 13 adaptiert wird. Der Ladedruck des Verdichters 13 wird auf der Druckseite 18 des Verdichters 13 vor der Drossel 20 ermittelt. Die Abgasturboladerdrehzahl wird anhand der Drehzahl der Turbine 12 ermittelt.

Aus den genannten Messgrößen werden zum Kalttest des Abgasturboladers 10 Kennwerte ermittelt. Bei diesen Kennwerten handelt es sich um das Verhältnis des Verdichterluftmassenstroms zum Verbrennungsmotorluftmassenstrom, das Verhältnis des Ladedrucks zum Verbrennungsmotorluftmassenstrom, das Verhältnis des Verdichterluftmassenstroms zur Drehzahl des Abgasturboladers 10 und das Verhältnis des Ladedrucks zur Drehzahl des Abgasturboladers 10. Auch hier kann es gegebenenfalls ausreichen, wenn nur einige der genannten Kennwerte aus den Messgrößen errechnet werden.

Bei einem in der Zeichnung nicht gezeigten Verbrennungsmotor mit zwei Abgasturboladern (Bi-Turbo) werden zwei dem Verbrennungsmotor zugeordnete Abgasturbolader gleichzeitig dem Kalttest unterzogen. Dabei ist jeder der beiden Zylinderbänke des Verbrennungsmotors ein Abgasturbolader zugeordnet. Jeder Abgasturbolader wird vom Abgastrakt einer Zylinderbank mit im schleppend angetriebenen Verbrennungsmotor erzeugter Druckluft versorgt.

Beim gleichzeitigen Kalttest beider Abgasturbolader eines Bi-Turboverbrennungsmotors werden nicht nur die eingangs im Zusammenhang mit dem Kalttest eines Abgasturboladers 10 ermittelten Messgrößen und Kennwerte erfasst und ausgewertet; vielmehr werden anhand dieser Messgrößen und Kennwerte auch die Charakteristiken beider Abgasturbolader ermittelt und miteinander verglichen. Dieser Vergleich erfolgt im Hinblick auf gleiche oder nahezu gleiche Charakteristika beider Abgasturbolader.

Stellt sich beim Kalttest heraus, dass die beiden getesteten Abgasturbolader hinsichtlich ihrer Charakteristiken zu große Abweichungen aufweisen, wird mindestens ein Abgasturbolader ausgetauscht gegen einen anderen Abgasturbolader und hiermit der Kalttest wiederholt. Der Kalttest wird so häufig durchgeführt, bis zwei Abgasturbolader mit gleicher oder annähernd gleicher Charakteristik gefunden sind, von denen annehmbar ist, dass sie sich beim späteren Betrieb des Verbrennungsmotors mit ausreichender Genauigkeit synchronisieren lassen.

### Bezugszeichenliste:

- 10: Abgasturbolader
- 11: Verbrennungsmotor
- 12: Turbine
- 13: Verdichter
- 14: Antriebswelle
- 15: Druckluftleitung
- 16: Pfeil
- 17: Pfeil
- 18: Druckseite
- 19: Verbindungsleitung
- 20: Drossel
- 21: Pfeil
- 22: Druckluftquelle
- 23: Verbindungsleitung

## Patentansprüche

1. Verfahren zum Prüfen von Abgasturboladern (10), wobei eine Turbine (12) des jeweiligen Abgasturboladers (10) mit unter Druck stehender Luft angetrieben wird (Kalttest), und die Prüfung mindestens unter Einbeziehung von Messgrößen am Verdichter (13) des jeweiligen Abgasturboladers (10) durchgeführt wird, **dadurch gekennzeichnet, dass** der Druck der Luft mindestens teilweise von einem schleppend angetriebenen Verbrennungsmotor (11) erzeugt wird.

2. Verfahren nach Anspruch 1, **dadurch gekennzeichnet, dass** beim schleppend angetriebenen Verbrennungsmotor (11) die an der Abgasseite anfallende unter Druck stehende Luft (Druckluft) zum Antrieb der Turbine (12) des jeweils zu prüfenden Abgasturboladers (10) verwendet wird.

3. Verfahren nach Anspruch 1, **dadurch gekennzeichnet, dass** einem Ansaugtrakt des Verbrennungsmotors (11) unter Druck stehende Luft zugeführt wird, der Druck der vom Verbrennungsmotor (11) angesaugten Luft im schleppend angetriebenen Verbrennungsmotor (11) erhöht wird und die danach aus einem jeweiligen Abgastrakt des Verbrennungsmotors (11) ausströmende Druckluft zum Antrieb der Turbine (12) jedes zu prüfenden Abgasturboladers (10) verwendet wird.

4. Verfahren nach Anspruch 1, **dadurch gekennzeichnet, dass** der oder jeder Abgasturbolader (10) mit demjenigen geschleppten Verbrennungsmotor (11) geprüft wird, dem der oder jeder Abgasturbolader (10) im späteren Betrieb des Verbrennungsmotors (11) zugeordnet wird.

5. Verfahren nach einem der Ansprüche 1 bis 4, **dadurch gekennzeichnet, dass** auf einer Druckseite (18) des Verdichters (13) die Luft gedrosselt wird.

6. Verfahren nach Anspruch 5, **dadurch gekennzeichnet, dass** an oder hinter der Druckseite (18) des Verdichters (13) mindestens eine Drossel (20) adaptiert wird, und vorzugsweise in Strömungsrichtung gesehen hinter der Drossel (20) die Luft an die Umgebung abgeleitet wird.

7. Verfahren nach einem der Ansprüche 1 bis 5, **dadurch gekennzeichnet, dass** zum Antrieb der Turbine (12) des oder jedes zu prüfenden Abgasturboladers (10) zusätzlich zur am Abgastrakt des schleppend angetriebenen Verbrennungsmotors (11) austretenden Druckluft auch Druckluft aus einer externen Druckluftquelle (22) verwendet wird.

8. Verfahren nach Anspruch 7, **dadurch gekennzeichnet, dass** der Ansaugtrakt des angetriebenen Verbrennungsmotors (11) mit unter Druck stehender Luft beaufschlagt wird, der Druck dieser Luft im schleppend angetriebenen Verbrennungsmotor (11) erhöht wird und die **dadurch** am Abgastrakt aus dem Verbrennungsmotor (11) austretende Druckluft verwendet wird zum Antrieb der Turbine (12) des oder jedes zu prüfenden Abgasturboladers (10).

9. Verfahren nach Anspruch 6, **dadurch gekennzeichnet, dass** Messgrößen des Verdichters (13), insbesondere der Ladedruck zwischen der Druckseite (18) des Verdichters (13) und der Drossel (20), ermittelt werden und vorzugsweise aus den beim Kalttest ermittelten Messgrößen Kennwerte des jeweils zu prüfenden Abgasturboladers (10) ermittelt werden.

10. Verfahren nach Anspruch 9, **dadurch gekennzeichnet, dass** neben dem Ladedruck (Verdichtungsenddruck) der Verdichterluftmassenstrom, der Verbrennungsmotorenluftmassenstrom, der Ansaugdruck des Verbrennungsmotors (11), die Drehzahl des Abgasturboladers (10), die Drehzahl des Verbrennungsmotors (11) und/oder die Temperatur der Luft und/oder Öls gemessen werden.

11. Verfahren nach Anspruch 10, **dadurch gekennzeichnet, dass** die Kennwerte des jeweiligen Abgasturboladers (10) aus den Verhältnissen von Verdichterluftmassenstrom zum Verbrennungsmotorluftmassenstrom, dem Verhältnis des Ladedrucks zum Verbrennungsmotorluftmassenstrom dem Verhältnis des Verdichterluftmassenstroms zur Drehzahl des Abgasturboladers (10) und/oder dem Verhältnis des Ladedrucks zur Drehzahl des Abgasturboladers (10) ermittelt werden.

12. Verfahren nach einem der Ansprüche 1 bis 11, **dadurch gekennzeichnet, dass** mehrere, vorzugsweise zwei, dem Verbrennungsmotor (11) zugeordnete Abgasturbolader (10) gleichzeitig am schleppend angetriebenen Verbrennungsmotor (11) geprüft werden.

## Claims

1. A method for the testing of exhaust-gas turbochargers (10), a turbine (12) of the respective exhaust-gas turbocharger (10) being driven by means of air which is under pressure (cold test), and the test being carried out at least with the inclusion of measurement quantities on the compressor (13) of the respective turbocharger (10), **characterized in that** the pressure of the air is generated at least partially by an internal combustion engine (11) driven in trailing mode.

2. Method as claimed in Claim 1, **characterized in that**, in the internal combustion engine (11) driven in trailing mode, the air which occurs on the exhaust-gas side and is under pressure (compressed air) is used for driving the turbine (12) of the exhaust-gas turbocharger (10) to be tested in each case.

3. The method as claimed in Claim 1, **characterized in that** air which is under pressure is supplied to an intake tract of the internal combustion engine (11), the pressure of the air sucked in by the internal combustion engine (11) is increased in the internal combustion engine (11) driven in trailing mode, and the compressed air which thereafter flows out of the respective exhaust tract of the internal combustion engine (11) is used for driving the turbine (12) of each exhaust-gas turbocharger (10) to be tested.

4. The method as claimed in Claim 1, **characterized in that** the or each exhaust-gas turbocharger (10) is tested by means of that trailing internal combustion engine (11) to which the or each exhaust-gas turbocharger (10) is assigned during the subsequent operation of the internal combustion engine (11).

5. The method as claimed in one of the Claims 1 to 4, **characterized in that** the air is throttled on a delivery side (18) of the compressor.

6. The method as claimed in Claim 5, **characterized in that** at least one throttle (20) is adapted on or downstream of a the delivery side (18) of the compressor (13), and that the air is preferably discharged into the surroundings downstream of the throttle (20), as seen in the direction of flow.

7. The method as claimed in one of the Claims 1 to 5, **characterized in that** compressed air from an external compressed air source (22) is used for driving the turbine (12) of the or each exhaust-gas turbocharger (10) to be tested in addition to the compressed air emerging at the exhaust tract of the internal combustion engine (11) driven in trailing mode.

8. The method as claimed in Claim 7, **characterized in that** the intake tract of the driven internal combustion engine (11) is acted upon by air which is under pressure, the pressure of this air is increased in the internal combustion engine (11) driven in trailing mode, and the air of increased pressure which thereby emerges from the internal combustion engine (11) at the exhaust tract is used for driving the turbine (12) of the or each exhaust-gas turbocharger (10) to be tested.

9. The method as claimed in Claim 6, **characterized in that** measurement quantities of the compressor (13), in particular the boost pressure between the delivery side (18) of the compressor (13) and the throttle (20), are determined, preferably characteristic values of the respective exhaust-gas turbocharger being determined from the measurement quantities obtained during the cold test.

10. The method as claimed in Claim 9, **characterized in that**, in addition to the boost pressure (final compression pressure), the compressor mass airflow, the internal combustion engine mass airflow, the intake pressure of the internal combustion engine (11), the rotational speed of the exhaust-gas turbocharger (10), the rotational speed of the internal combustion engine (11) and/or the temperature of the air and/or of the oil are measured.

11. The method as claimed in Claim 10, **characterized in that** the characteristic values of the respective exhaust-gas turbocharger (10) are determined from the ratios of the compressor mass airflow to the internal combustion engine mass airflow, the ratio of the boost pressure to the internal combustion engine mass airflow, the ratio of the compressor mass airflow to the rotational speed of the exhaust-gas turbocharger (10) and/or the ratio of the boost pressure to the rotational speed of the exhaust-gas turbocharger (10).

12. The method as claimed in one of the Claims 1 to 11, **characterized in that** a plurality of, preferably two, exhaust-gas turbochargers (10) assigned to the internal combustion engine (11) are tested simultaneously on the internal combustion engine (11) driven in trailing mode.

## Revendications

1. Procédé pour tester les turbocompresseurs à gaz d'échappement (10), dans lequel une turbine (12) du turbocompresseur à gaz d'échappement respectif (10) est entraînée avec de l'air sous pression (test à froid) et le test est effectué sur le compresseur (13) du turbocompresseur à gaz d'échappement respectif (10), au moins en incorporant des valeurs de mesure, **caractérisé en ce que** la pression de l'air est produite au moins en partie par un moteur à combustion interne (11) entraîné en mode à combustion lente.

2. Procédé selon la revendication 1, **caractérisé en ce que** dans le cas du moteur à combustion interne (11) entraîné en mode à combustion lente, l'air sous pression se présentant du côté des gaz d'échappement (air sous pression) est utilisé pour entraîner la turbine (12) du turbocompresseur à gaz d'échappement respectif (10) à tester.

3. Procédé selon la revendication 1, **caractérisé en ce que** l'on achemine de l'air sous pression à un conduit d'admission du moteur à combustion interne (11), la pression de l'air aspiré par le moteur à combustion interne (11) est augmentée dans le moteur à combustion interne (11) entraîné en mode à combustion lente et l'air sous pression sortant ensuite d'un conduit de gaz d'échappement respectif du moteur à combustion interne (11) est utilisé pour entraîner la turbine (12) de chaque turbocompresseur à gaz d'échappement à tester (10).

4. Procédé selon la revendication 1, **caractérisé en ce que** le ou chaque turbocompresseur à gaz d'échappement (10) est testé avec le moteur à combustion interne (11) entraîné en mode à combustion lente auquel est associé le ou chaque turbocompresseur (10) lors du fonctionnement subséquent du moteur à combustion interne (11).

5. Procédé selon l'une quelconque des revendications 1 à 4, **caractérisé en ce que** l'air est étranglé sur un côté pression (18) du compresseur (13).

6. Procédé selon la revendication 5, **caractérisé en ce qu'**au moins un étranglement (20) est adapté sur ou derrière le côté pression (18) du compresseur (13), et de préférence vu dans la direction d'écoulement derrière l'étranglement (20), l'air est dévié vers l'environnement.

7. Procédé selon l'une quelconque des revendications 1 à 5, **caractérisé en ce que** pour l'entraînement de la turbine (12) du ou de chaque turbocompresseur (10) à tester, on utilise en plus de l'air sous pression sortant au niveau du conduit de gaz d'échappement du moteur à combustion interne (11) entraîné en mode à combustion lente, également de l'air sous pression provenant d'une source d'air sous pression extérieure (22).

8. Procédé selon la revendication 7, **caractérisé en ce que** le conduit d'admission du moteur à combustion interne entraîné (11) est sollicité avec de l'air sous pression, la pression de cet air est augmentée dans le moteur à combustion interne (11) entraîné en mode à combustion lente et l'air sous pression sortant de ce fait au niveau du conduit de gaz d'échappement hors du moteur à combustion interne (11) est utilisé pour entraîner la turbine (12) du ou de chaque turbocompresseur à gaz d'échappement (10) à tester.

9. Procédé selon la revendication 6, **caractérisé en ce que** des valeurs de mesure du compresseur (13), notamment la pression d'admission entre le côté pression (18) du compresseur (13) et l'étranglement (20), sont déterminées, de préférence à partir des valeurs de mesure déterminées lors du test à froid, on détermine des paramètres du turbocompresseur à gaz d'échappement respectif (10) à tester.

10. Procédé selon la revendication 9, **caractérisé en ce que**, en plus de la pression d'admission (pression finale de compression) du débit massique d'air du compresseur, on mesure aussi le débit massique d'air du moteur à combustion interne, la pression d'admission du moteur à combustion interne (11), la vitesse de rotation du turbocompresseur à gaz d'échappement (10), la vitesse de rotation du moteur à combustion interne (11) et/ou la température de l'air et/ou de l'huile.

11. Procédé selon la revendication 10, **caractérisé en ce que** les paramètres de chaque turbocompresseur à gaz d'échappement (10) sont déterminés à partir des rapports du débit massique d'air de compresseur au débit massique d'air du moteur à combustion interne, du rapport de la pression d'admission au débit massique de l'air du moteur à combustion interne, du rapport du débit massique d'air du compresseur à la vitesse de rotation du turbocompresseur à gaz d'échappement (10) et/ou du rapport de la pression d'admission à la vitesse de rotation du turbocompresseur à gaz d'échappement (10).

12. Procédé selon l'une quelconque des revendications 1 à 11, **caractérisé en ce que** plusieurs, de préférence deux turbocompresseurs à gaz d'échappement (10)associés au moteur à combustion interne (11) sont simultanément testés sur le moteur à combustion interne (11) entraîné en mode à combustion lente.
